(19) **Europäisches Patentamt / European Patent Office / Office européen des brevets**

(11) **EP 3 267 382 A1**

(12) **EUROPEAN PATENT APPLICATION**
published in accordance with Art. 153(4) EPC

(43) Date of publication:
**10.01.2018  Bulletin 2018/02**

(21) Application number: **16758477.0**

(22) Date of filing: **02.03.2016**

(51) Int Cl.:
**G06Q 20/36** *(2012.01)*

(86) International application number:
**PCT/CN2016/075365**

(87) International publication number:
**WO 2016/138862 (09.09.2016 Gazette 2016/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.03.2015  CN 201510093393**

(71) Applicant: **Shanghai Luluyou Information Technology Co. Ltd.
Shanghai 201306 (CN)**

(72) Inventor: **CHEN, Rong
Shanghai 201306 (CN)**

(74) Representative: **ABG Patentes, S.L.
Avenida de Burgos, 16D
Edificio Euromor
28036 Madrid (ES)**

(54) **METHOD AND DEVICE FOR PROCESSING ELECTRONIC CURRENCY**

(57)    A method and a device for processing electronic money realize control for payment and circulation of electronic money. The method comprises: dividing electronic money in a user account into one or more monetary units (S11); determining a unit identifier for at least one of the one or more monetary units through encoding processing (S12); and establishing account status information corresponding to the user account (S13).

Start

Dividing electronic money in a user account into one or more monetary units — S11

Determining a unit identifier for at least one of the one or more monetary units through encoding processing — S12

Establishing account status information corresponding to the user account — S13

End

FIG. 1

EP 3 267 382 A1

**Description**

TECHNICAL FIELD

This application relates to the field of Internet financial technology, and particularly to a technique for processing electronic money.

BACKGROUND

The Internet has been more and more popular since the 1990s, and has gradually entered businesses and families from universities and research institutions. The function of the Internet has evolved into a popular means of information dissemination from information sharing, and business and trade activities have gradually entered the field. With the use of the Internet, costs of business and trade activities are reduced, and more business opportunities are created. Therefore, electronic commerce technology has been developed and becomes the biggest hot spot of Internet applications. In order to adapt to the market trend of electronic commerce, electronic payment, network payment and other payment methods are developing. However, in the process of transactions through the network, such as payment and transfer process, crimes about the user accounts, especially steal of money in the electronic accounts, have occurred often because the Internet is an open system platform. In view of this, there are great challenges on how to enhance the security of user electronic accounts and how to control payment and circulation of electronic money.

SUMMARY

The present application provides a method and a device for processing electronic money which can realize control for payment and circulation of electronic money.

The present application provides a method for processing electronic money, comprising:

dividing electronic money in a user account into one or more monetary units;
determining a unit identifier for at least one of the one or more monetary units through encoding processing;
establishing account status information corresponding to the user account, wherein the account status information includes correspondence relationship between the unit identifier of the monetary unit which is obtained by the encoding processing and a denomination.

The present application also provides a device for processing electronic money, comprising:

a first means for dividing electronic money in a user account into one or more monetary units;
a second means for determining a unit identifier for at least one of the one or more monetary units through encoding processing;
a third means for establishing account status information corresponding to the user account, wherein the account status information includes correspondence relationship between the unit identifier of the monetary unit which is obtained by the encoding processing and a denomination.

Compared with the prior art, in the embodiments of the present application, the electronic money in the user account is divided into one or more monetary units; each of the monetary units is encoded to generate a unique unit identifier; the unit identifier is bound to the monetary unit. When electronic money is received or transferred, in addition to accepting the change in the denomination information of the user account, the unit identifier bound with the monetary unit is accepted too. By tracking the unit identifier, it is possible to control the payment and circulation of the electronic money.

BRIEF DESCRIPTION OF DRAWINGS

Other features, objects and advantages of the present application will become more apparent from the following detailed description of the non-limiting embodiments with reference to the accompanying drawings in which:

FIG. 1 is a flowchart of a method for processing electronic money according to an embodiment of the present invention;
FIG. 2 is a flowchart of a method for processing electronic money according to an embodiment of the present invention;
FIG. 3 is a schematic structural view of an electronic money processing device according to an embodiment of the present invention; and
FIG. 4 is a schematic structural view of an electronic money processing device according to another embodiment of the present invention.

DETAILED DESCRIPTION

Hereinafter the present application will be described in further detail with reference to the accompanying drawings.

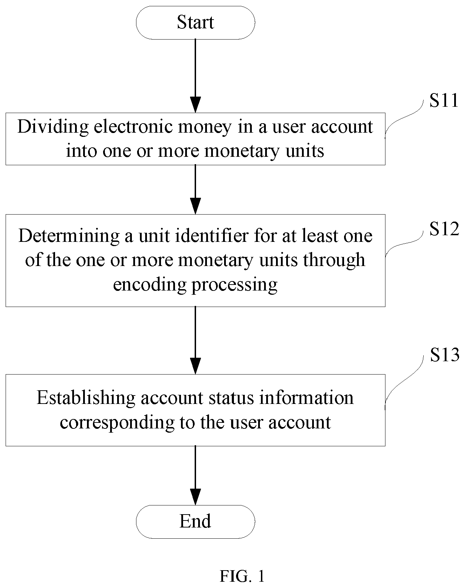

FIG. 1 is a flowchart of a method for processing electronic money according to an embodiment of the present invention.

Step S11: dividing electronic money in a user account into one or more monetary units;

Step S12: determining a unit identifier for at least one of the one or more monetary units through encoding processing;

Step S13: establishing account status information corresponding to the user account, wherein the account status information includes correspondence relationship between the unit identifier of the monetary unit which is obtained by the encoding processing and a denomination.

In detail, in Step S11, the electronic money refers to money available for payment, including but not limited to at least one of the following items: 1) money that is payable electronically, e.g., through debit cards, credit cards, electronic checks or electronic wallets; 2) virtual money, such as Q coins and Baidu coins; 3) rewards, vouchers, coupons and so on. Here, the monetary unit refers to a money amount of the electronic money which is inseparable in payment and circulation, and may also refer to a basic currency unit, such as 1000-yuan, 100-yuan, 1-yuan, 1-jiao and 1-fen. The currency units of different electronic money may be predetermined. For example, an electronic money issuer may determine corresponding currency units when issuing the electronic money. Different currency units may have different denominations to satisfy different payment and circulation scenarios. Here, taking fen, jiao and yuan as an example, the currency units may include 1-fen, 2-fen, 5-fen, 1-jiao, 2-jiao, 5-jiao, 1-yuan, 2-yuan, 5-yuan, 10-yuan, 50-yuan and 100-yuan. It should be understood by those skilled in the art that the above-described electronic money and currency units are by way of example only, other existing or future electronic money or currency units are included within the scope of the present application if they are applicable to this application, and are incorporated herein by reference.

For example, it is assumed that a kind of electronic money has three levels of currency units from large to small which are represented by $\alpha, \beta$ and $\gamma$ respectively. Here, $\alpha$ is the largest level of currency unit, $\beta$ is a currency unit which is one tenth of $\alpha$, and $\gamma$ is a currency unit which is one hundredth of $\alpha$. In Step S11, assuming that user A has a certain type of electronic money, e-money-A, and the total amount of electronic money in his or her account is sum-A= $a_1 \times \alpha + a_2 \times \beta + a_3 \times \gamma$, where each of $a_1$, $a_2$ and $a_3$ is a positive integer, then the electronic money e-money-A in the user account of user A can be divided into three monetary units, e.g., $\alpha, \beta$ and $\gamma$. Alternatively, the electronic money e-money-A in the user account of user A may be divided into two monetary units, e.g., $\alpha$ and $\beta$, then the total amount of electronic money in the user account of user A, i.e., sum-A, is represented by the following equation:

$$\text{sum-A} = a_1 \times \alpha + a_2 \times \beta + a_3 \times \gamma = a_1 \times \alpha + a_2 \times \beta + a_3 \times 0.1\beta = a_1 \times \alpha + (a_2 + 0.1a_3) \times \beta$$

In another embodiment of the present invention, the monetary units are related to not only the current units, but also the denominations of the electronic money. That is, each monetary unit is a currency unit having a certain denomination. Taking the total amount of the electronic money of user A is sum-A= $a_1 \times \alpha + a_2 \times \beta + a_3 \times \gamma$ as an example, if the selected currency units are $\alpha, \beta$ and $\gamma$, the number of the monetary units is $a_1+a_2+a_3$; and if the selected currency units are $\alpha$ and $\beta$, the number of the monetary units is $a_1+a_2+0.1a_3$. For example, when the currency unit is 100-yuan, 200 yuans correspond to two currency units, and thus correspond to two unit identifiers in the subsequent processing.

It should be understood by those skilled in the art that the above-described manner of dividing electronic money in a user account into one or more monetary units is by way of example only, other existing or future manners of dividing electronic money in a user account into one or more monetary units are included within the scope of the present application if they are applicable to this application, and are incorporated herein by reference. In Step S12, the encoding processing refers to encoding for the monetary units. The encoded data will contain identity information of the sender, and the encoding can be implemented through, e.g., digital signature, thereby ensuring the integrity of information transmission and the identity of the sender, and preventing the occurrence of denial in the transaction. The unit identifiers may be used to identify the monetary units after encoding processing, and may be represented in the form of numbers, characters or combinations thereof. It should be understood by those skilled in the art that the above-described encoding manners and unit identifiers are by way of example only, other existing or future encoding manners and unit identifiers are included within the scope of the present application if they are applicable to this application, and are incorporated herein by reference. With "encoding" for electronic money, payment and circulation of electronic money can be controlled, which can effectively curb the criminal acts, e.g., theft, on the electronic accounts and improve the security of the electronic accounts.

For example, assuming that the electronic money e-money-A in the user account of user A is divided in Step S11 and the resulting monetary units are $\alpha$, $\beta$ and $\gamma$, in Step S12, the system implements digital signature processing for the monetary units by digitally signing, a unit identifier of at least one of the one or more monetary units can be obtained. For example, the unit identifiers corresponding to the monetary units $\alpha$, $\beta$ and $\gamma$ are identify-$\alpha$-$a_1$, identify-$\beta$-$a_2$ and identify-$\gamma$-$a_3$ respectively.

Here, it will be understood by those skilled in the art that in a particular embodiment, it is possible that only monetary units having large denominations are encoded while the monetary units having small denominations are not encoded, thereby balancing encoding processing overhead (such as device overhead, etc.) and the security of accounts.

It should be understood by those skilled in the art that the above-described manner of determining a unit identifier for at least one of the one or more monetary units through encoding processing is by way of example only, other existing or future manners of determining a unit identifier for at least one of the one or more monetary units through encoding processing are included within the scope of the present application if they are applicable to this application, and are incorporated herein by reference.

In Step S13, the account status information includes correspondence relationship between the unit identifier of the monetary unit which is obtained by the encoding processing and a denomination.

In the above-mentioned embodiment, in Step S13, an example of account status information corresponding to the user account of user A is shown in Table 1.

Table 1

| User account of user A | Unit identifier | Denomination |
|---|---|---|
| | identify-$\alpha$ - $a_1$ | $a_1 \times \alpha$ |
| | identify-$\beta$ - $a_2$ | $a_2 \times \beta$ |
| | identify- $\gamma$ - $a_3$ | $a_3 \times \gamma$ |

The account status information indicates the balance of the user account and/or composition thereof. It should be noted that, although all of the unit identifiers of different monetary units having the currency unit with the same denomination are presented as identify- $\alpha$ - $a_1$, they have different encoding contents. For example, two $\alpha$ monetary units may have different unit identification information.

The steps of the method are continuous. Specifically, the electronic money in the user account are divided into one or more monetary units continuously in Step S11; the unit identifiers for at least one of the one or more monetary units are determined through encoding processing continuously in Step S12; and the account status information corresponding to the user account is established continuously in Step S13. Here, it should be understood by those skilled in the art that the terms "continuous" and "continuously" mean that the steps of dividing electronic money in a user account into one or more monetary units, determining a unit identifier for at least one of the one or more monetary units through encoding processing and establishing account status information corresponding to the user account are implemented repeatedly, until the step of dividing electronic money in a user account into one or more monetary units stops after a long time.

Preferably, in Step S11, the electronic money in the user account may be divided into one or more monetary units according to a predetermined unit division rule. The predetermined unit division rule may be based on the currency unit (e.g., 100-yuan, 1000-yuan, or 10000-yuan) of the electronic money or the minimum currency unit. It should be understood by those skilled in the art that the above-described unit division rule is by way of example only, other existing or future unit division rules are included within the scope of the present application if they are applicable to this application, and are incorporated herein by reference. In an embodiment of the present invention, the predetermined unit division rule may be stored in a device implementing the step, and may be stored in a device connected to the device implementing the step through a network.

More preferably, the method further comprises: determining the unit division rule based on account output history record information corresponding to the user account. For example, the currency unit frequently used in the user account is determined based on a payment or transfer record of the user account, and the currency unit is determined as the monetary unit based on which the electronic money will be divided, so as to determine the unit division rule. Here, the account output history record information includes, but is not limited to, records such as payment and transfer of the corresponding user account.

For example, in the above-mentioned embodiment, it may be determined that the unit division rule contains only the currency unit of $\alpha$ level if the payment or transfer record of the user account of user A indicates that user A uses the currency unit of $\alpha$ level.

Here, in the present invention, the combined operation overhead at the time of subsequent payment or transfer can be reduced by determining the unit division rule based on the account output history record information corresponding to the user account.

In a preferred embodiment, the method further comprises:

retrieving account input information of the user account, wherein the account input information refers to data information formed during operation on the user account, and may specifically include a currency denomination to be varied and a corresponding unit identifier, as well as a direction of variation, e.g., increase or decrease;

updating the account status information based on the account input information.

Specifically, the account input information of the user account may be retrieved by calling an application program interface (API) provided by a platform corresponding to the user account, or by receiving the account input information for the user account sent by a payer via a payment gateway or receiving the transfer information of the user account with respect for third party accounts.

If user B performs a transfer operation to the user account of user A, the system can receive the transfer information transmitted to the user account of user A from the payment platform of user B through a payment gateway, so as to retrieve the account input information of the user account of user A.

It should be understood by those skilled in the art that the above-described manner of retrieving the account input information of the user account is by way of example only, other existing or future manners of retrieving the account input information of the user account are included within the scope of the present application if they are applicable to this application, and are incorporated herein by reference.

In an embodiment of the present invention, the manners of updating the account status information based on the account input information include, but are not limited to, at least one of:

1) adding correspondence relationship between the unit identifier of the monetary unit and the denomination in the account input information into the account status information.

For example, if retrieving the transfer information sent to the user account of user A from user B through the payment platform of user B, e.g., transfer of a denomination of $b_1 \times \alpha$ having the unit identifier as identify-$\alpha$-b1, the system can add correspondence relationship between the unit identifier of the monetary unit and the denomination in the account input information into the account status information to obtain the account status information as shown in Table 2 below:

Table 2

| User account of user A | Unit identifier | Denomination |
|---|---|---|
| | identify-$\alpha$ - $a_1$ | $a_1 \times \alpha$ |
| | identify-$\beta$ -$a_2$ | $a_2 \times \beta$ |
| | identify- $\gamma$ - $a_3$ | $a_3 \times \gamma$ |
| | identify-$\alpha$ -$b_1$ | $b_1 \times \alpha$ |

According to the description of the above embodiment, it can be seen that there are b1 different identify- $\alpha$ - b1, and identify- $\alpha$ - b1 carries information about user B.

2) if the account input information contains only the amount of variation and does not include the corresponding unit identifier, firstly implementing encoding processing for the amount according to the Steps S11 to S13 to obtain correspondence relationship between a unit identifier of one or more new monetary units and a denomination; then adding the correspondence relationship between the unit identifier of the one or more new monetary units and the denomination into the account status information.

For example, if the system receives the transfer information transmitted to the user account of user A from the payment platform of user C but the electronic money related in the account input information is not subjected to division and encoding processing, the system firstly obtains the correspondence relationship between the unit identifier of the one or more new monetary units and the denomination by performing Steps S11 -S13 to obtain transfer of a denomination of $c_1 \times \beta$ having the unit identifier as identify-$\beta$ -$c_1$, the finally obtained updated account status information is shown in the following Table 3:

Table 3

| User account of user A | Unit identifier | Denomination |
| --- | --- | --- |
| | identify-$\alpha$ - $a_1$ | $a_1 \times \alpha$ |
| | identify-$\beta$ -$a_2$ | $a_2 \times \beta$ |
| | identify- $\gamma$ - $a_3$ | $a_3 \times \gamma$ |
| | identify- $\beta$ - $c_1$ | $c_1 \times \beta$ |

According to the description of the above embodiment, it can be seen that there are c1 different identify- $\alpha$ -b1, and identify- $\alpha$ -b1 carries information about user B.

It should be understood by those skilled in the art that the above-described manner of updating the account status information is by way of example only, other existing or future manners of updating the account status information are included within the scope of the present application if they are applicable to this application, and are incorporated herein by reference.

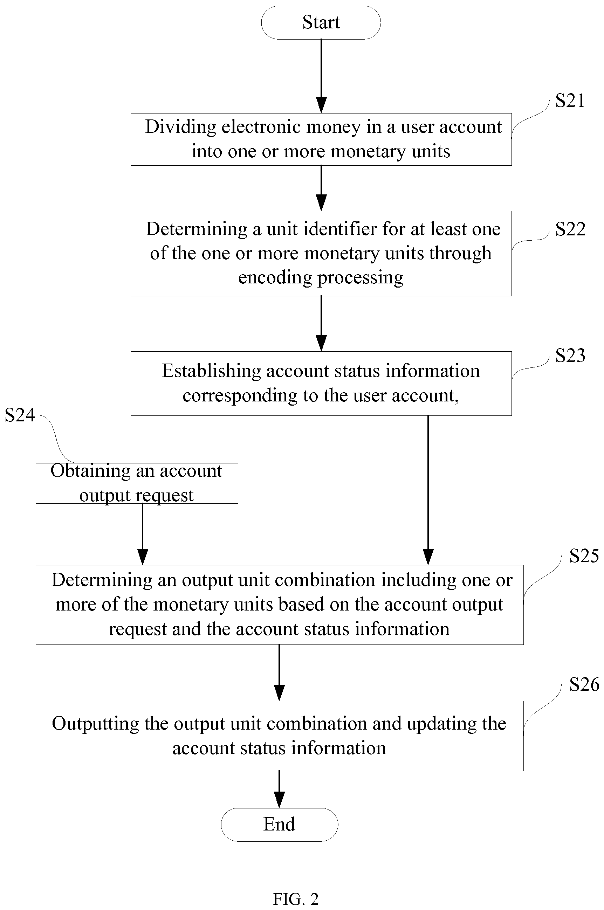

FIG. 2 is a flowchart of a method for processing electronic money according to another embodiment of the present invention. As shown in FIG. 2, the method comprises:

Step S21: dividing electronic money in a user account into one or more monetary units;

Step S22: determining a unit identifier for at least one of the one or more monetary units through encoding processing;

Step S23: establishing account status information corresponding to the user account, wherein the account status information includes correspondence relationship between the unit identifier of the monetary unit which is obtained by the encoding processing and a denomination;

Step S24: obtaining an account output request;

Step S25: determining an output unit combination including one or more of the monetary units based on the account output request and the account status information, wherein a sum of denominations of the respective monetary units in the output unit combination is greater than or equal to an output denomination corresponding to the account output request;

Step S26: outputting the output unit combination and updating the account status information.

It will be understood by those skilled in the art that Steps S21, S22 and S23 may be the same as or substantially the same as the corresponding steps in the embodiment shown in FIG. 1. These steps will not be described here for simplicity and are incorporated here by reference.

Specifically, in Step S24, an account output request can be obtained by calling an application program interface (API) provided by a platform corresponding to the user account of user A. Here, the account output request includes, but is not limited to, a transfer request or a payment request.

For example, if user A purchased a train ticket via network, the amount to be paid is $m \times \beta + n \times \gamma$ and the user account of user A is used for this payment, in Step S24, the system can obtain the payment request by calling an application program interface (API) provided by a platform corresponding to the user account of user A.

It should be understood by those skilled in the art that the above-described manner of obtaining the account output request is by way of example only, other existing or future manners of obtaining the account output request are included within the scope of the present application if they are applicable to this application, and are incorporated herein by reference.

In the above-mentioned example, assuming that the account status information of user A is as shown in the above Table 1, the amount to be paid is $m \times \beta + n \times \gamma$ ,in Step S25,an output unit combination including one or more of the monetary units can be determined based on the account output request and the account status information shown in the above Table 1, wherein a sum of the denominations of the respective monetary units in the output unit combination is greater than or equal to an output denomination corresponding to the account output request.

If $a_2 \geq$ m and $a_3 \geq$ n, in Step S25, the determined output unit combination may be $m \times \beta + n \times \gamma$ or $a_2 \times \beta + a_3 \times \gamma$. Assuming that the determined output unit combination is $m \times \beta + n \times \gamma$, in Step S26, the output unit combination is output so that the payment is completed, and $m \times \beta + n \times \gamma$ is deleted from the account status information shown in Table 1 to update the account status information. The updated account status information is shown in Table 4 below:

Table 4

| User account of user A | Unit identifier | Denomination |
|---|---|---|
| | identify-$\alpha$ - $a_1$ | $a_1 \times \alpha$ |
| | identify-$\beta$-$a_2$ | $(a_2 - m) \times \beta$ |
| | identify- $\gamma$ - $a_3$ | $(a_3 - n) \times \gamma$ |

If $a_2 < m$ and $a_3 < n$, the denominations corresponding to $\alpha$, $\beta$ and $\gamma$ can be split. For example, the denomination corresponding to the account status information shown in Table 1 above can be represented as $(a_1 - 1)\alpha + (a_2 + 9)\beta + (a_3 + 10)\gamma$. In this way, since $(a_2 + 9) \geq m$ and $(a_3 + 10) \geq n$, $m \times \beta + n \times \gamma$ can still be output. Then in this case, after Step S26, the updated account status information is shown in Table 5 below:

Table 5

| User account of user A | Unit identifier | Denomination |
|---|---|---|
| | identify-$\alpha$ - $a_1$ | $(a_1 - 1) \times \alpha$ |
| | identify-$\beta$ - $a_2$ | $(a_2 + 9 - m) \times \beta$ |
| | identify- $\gamma$ - $a_3$ | $(a_3 + 10 - n) \times \gamma$ |

As another example, no matter which one is larger between $a_2$ and $m$ and between $a_3$ and $n$, in Step S25, the denomination corresponding to the account status information and the output denomination can be expressed in a single monetary unit. For example, the denomination corresponding to the account status information shown in Table 1 can be represented as $(a_1 + 0.1a_2 + 0.01a_3) \times \alpha$ while the output denomination is $m \times \beta + n \times \gamma = (0.1m + 0.01n) \times \alpha$, so the determined output unit combination can be $(0.1m + 0.01n) \times \alpha$ or $(a_1 + 0.1a_2 + 0.01a_3) \times \alpha$.

Of course, it will be understood by those skilled in the art that in the payee's account, the information shown in Table 6 below will be added:

Table 6

| User account of payee | Unit identifier | Denomination |
|---|---|---|
| | identify- $\beta$ -$m$ | $m \times \beta$ |
| | identify-$\gamma$ -$n$ | $n \times \gamma$ |

It can be seen that, in this step, although $m \times \beta$ and $n \times \gamma$ originate from $a_2 \times \beta$ and $a_3 \times \gamma$ of user A, when user A transfers the $m \times \beta$ and $n \times \gamma$ to the payee, the system will generate their own unit identifiers for $m \times \beta$ and $n \times \gamma$, that is, identify-$\beta$-$m$ may be different from identify-$\beta$-$a_2$.

Preferably, in Step S26, it is firstly judged whether the output unit combination satisfies an output restriction condition. When the output unit combination satisfies the output restriction condition, the output unit combination is outputted, and the account status information is updated. Preferably, the output restriction condition comprises that the monetary unit in the output unit combination satisfies at least one of the following:

1) the circulation frequency of the unit identifier of the monetary unit is lower than or equal to a circulation frequency threshold, so that the account security is improved with restriction of the circulation number of the unit identifier of the monetary unit.

For example, in Step S25, the determined output unit combination is $m \times \beta + n \times \gamma$, the unit identifiers of the monetary units in the output unit combination are identify-$\beta$-$m$ and identify-$\gamma$-$n$, and the corresponding circulation frequencies are 1 time per day and 3 times per day respectively. Each of them is less than the circulation frequency threshold, e.g., 5 times per day. In this case, the system determines in Step S26 that the output unit combination $m \times \beta + n \times \gamma$ satisfies the output restriction condition and thus outputs the output unit combination.

2) the target output account corresponding to the monetary unit belongs to the trusted accounts of the latest source account of the monetary unit; wherein the target output account refers to the receiving account corresponding to the account output request, and the latest source account of the monetary unit refers to an account in which the monetary unit has stayed in the account for a certain period of time (that is, the monetary unit in the account is obtained legally). Money transfers between trust accounts are not subject to "frequency of circulation" restrictions so as to balance security and convenience.

3) the monetary unit has no corresponding unit identifier. For example, a monetary unit having a small denomination may not be limited in its circulation, and accordingly, it needs not be identified. That is, a monetary unit without corresponding unit identifier is a monetary unit whose denomination is less than a predetermined threshold.

As an example, if the output unit combination determined by the system in Step S25 is $m \times \beta + n \times \gamma$ and the monetary unit $\gamma$ in the output unit combination have no corresponding unit identifier, in Step S26, the system judges that the output unit combination satisfies the output restriction condition and thus outputs the output unit combination.

4) a sum of the denominations of all monetary units having no unit identifier in the output unit combination is less than a trusted denomination threshold. With this approach, the account risk is controlled by setting the cumulative threshold for the monetary units with small denominations.

It should be understood by those skilled in the art that the above-described output restriction conditions are by way of example only, other existing or future output restriction conditions are included within the scope of the present application if they are applicable to this application, and are incorporated herein by reference.

More preferably, the method further comprises: determining the output restriction condition based on account output history record information corresponding to the user account.

For example, if user A has made multiple transfers to a certain account through his or her user account, the system may set the "certain account" as a "trusted account" of the user account of user A. In this way, transfer of money between trusted accounts is not subjected to "circulation frequency" limit, so as to balance security and convenience.

In the above-mentioned embodiments of the present invention, since the unit identifiers are obtained by encoding in which information about the sender is included, it is obvious that the unit identifiers of the same money units originating from different users are different even though the money units have the same denomination. For example, the unit identifiers respectively corresponding to eight 100-yuans in the user account of user A are different from the unit identifiers respectively corresponding to eight 100-yuans in the user account of user B.

The above-mentioned embodiment is explained and illustrated by a practical example. Assuming that there are 876 yuans in the user account of user A, the electronic money in the user account of user A can be divided into three currency units, i.e. 100-yuan, 10-yuan and 1-yuan, then the user status information of user A is as shown in Table 7:

Table 7

| User account of user A | Unit identifier | Denomination |
| --- | --- | --- |
| | Identify1A | 8*100 |
| | Identify2A | 7*10 |
| | Identify3A | 6*1 |

In an embodiment of the present invention, it may be interpreted that there are eight 100-yuanshaving the unit identifiers as Identify1A (as described above, although the same identifier is used, but the contained information are actually different)in the user account of user A; there are seven 10-yuans having the unit identifiers as Identify2A and there are six 1-yuanshaving the unit identifiers as Identify3A.

When user A transfers 212 yuans in his or her user account to user B, the user status information of user A is changed to as shown in Table 8:

Table 8

| User account of user A | Unit identifier | Denomination |
| --- | --- | --- |
| | Identify1A | 6*100 |
| | Identify2A | 6*10 |
| | Identify3A | 4*1 |

At this time, the following information as shown in Table 9 is added to the user status information of the user account of user B. It shows that the two 100-yuans are newly added in the user current of user B. The unit identifiers corresponding to the two 100-yuans are the same as those in the user status information of the user account of user A, i.e., Identify1A. However, the two unit identifiers of Identify1A are different from the six unit identifiers of Identify1A remaining in the user account of user A. This explanation is applicable to similar cases below and repeated explanations will be omitted. In addition, there are one 10-yuan having the unit identifier of Identify2A and two 1-yuans having the unit identifier of Identify3A in the user status information of the user account of user B.

Table 9

| User account of user B | Unit identifier | Denomination |
|---|---|---|
| | Identify1A | 2*100 |
| | Identify2A | 1*10 |
| | Identify3A | 2*1 |

Alternatively, when user A transfers 99 yuans in his or her user account to user B, the user status information of user A is changed to as shown in Table 10:

Table 10

| User account of user A | Unit identifier | Denomination |
|---|---|---|
| | Identify1A | 7*100 |
| | Identify2A | 7*10 |
| | Identify3A | 7*1 |

At this time, the following information as shown in Table 11 is added to the user status information of the user account of user B.

Table 11

| User account of user B | Unit identifier | Denomination |
|---|---|---|
| | Identify1A | 9*10 |
| | Identify1A | 9*1 |

If user A receives 121 yuans from user C, the user status information of user A will be changed to as shown in Table 12:

Table 12

| User account of user A | Unit identifier | Denomination |
|---|---|---|
| | Identify1A | 8*100 |
| | Identify2A | 7*10 |
| | Identify3A | 6*1 |
| | Identify 1C | 1*100 |
| | Identify2C | 2*10 |
| | Identify3C | 1*1 |

In this case, if user A lost a certain 100-yuan, the lost money could be found by tracing the corresponding unit identifier.

The methods according to the embodiments of the present invention will be described below with two more detailed examples.

Assuming that user A owns 876 yuans and the selected currency unit is 1-yuan, the electronic money in the user account of user A can be divided into 876 monetary units having the currency unit of 1-yuan, and the 876 monetary units correspond to 876 different unit identifiers. If user A transfers 55 yuans to user B, there will be only 821 different unit identifiers corresponding to monetary units having the denomination of 1-yuan while 55 different unit identifiers corresponding to monetary units having the denomination as 1-yuan will be added into the user account of user B. If user A receives 67 yuans from user C, 67 different unit identifiers corresponding to monetary units having the denomination of 1-yuanwill be added into the user account of user A, so that there are 943 different unit identifiers corresponding to monetary units having the denomination of 1-yuan in the user account of user A in total. If user A finds that a certain 1 yuan having a unit identifier as AAAAA was lost, user A can report it to a system administrator. Thereafter, the system administrator can directly locate a circulation path of the 1 yuan having the unit identifier as AAAAA, and directly freeze the 1 yuan having the unit identifier as AAAAA. If the 1 yuan having the unit identifier as AAAAA is found in the user account of user C, user C will not be able to use the 1 yuan until it is unfrozen.

Hereinafter another example will be described. Assuming that user A owns 876 yuans and the selected currency units are 100-yuan, 10-yuan and 1-yuan, the electronic money in the user account of user A can be divided into eight monetary units having the currency unit of 100-yuan, seven monetary units having the currency unit of 10-yuan and six monetary units having the currency unit of 1-yuan. That is, there are 21 monetary units in total, which correspond to 21 different unit identifiers respectively. Here, the correspondence relationship between the identifiers and the denominations of user A is shown in Table 13 below:

Table 13

| User account of user A | Unit identifier | Denomination |
|---|---|---|
| | Identify1A ...... Identify8A | 100 |
| | Identify9A ...... Identify 16A | 10 |
| | Identify 17A...... Identify21A | 1 |

If user A receives 356 yuans from user C, user A will have 35 monetary units which correspond to 35 different unit identifiers respectively. Among them, 11 monetary units have the denomination of 100-yuan, 13 monetary units have the denomination of 10-yuan, and 12 monetary units have the denomination of 1-yuan. As will be understood by those skilled in the art, when it is desired to display the balance of the user account of user A, the display will be in the normal display mode, that is, it will be displayed that the user owns 1231 yuans.

If user A transfers 55 yuans to user B, since user A has seven monetary units having the denomination of 10-yuan and six monetary units having the denomination of 1-yuan, each of which is larger than five, it is only required to deduct five monetary units having the denomination of 10-yuan and five monetary units having the denomination of 1-yuan and delete the corresponding unit identifiers in the user account of user A.

If user A transfers 99 yuans to user B, since each of the number of monetary units having the denomination of 10-yuan in the user account of user A and the number of monetary units having the denomination of 1-yuan in the user account of user A is less than 9, some monetary units having high denominations will be split. That is, one monetary unit having the denomination of 100-yuan can be divided into nine monetary units having the denomination of 10-yuan and ten monetary units having the denomination of 1-yuan, and then the transfer of monetary units is implemented. Here, it is should be noted that in the user account of user A, one unit identifier corresponding to the one monetary unit having the denomination of 100-yuan will be deleted, at the same time, nine unit identifiers corresponding to the monetary units having the denomination of 10-yuan and ten unit identifiers corresponding to the monetary units having the denomination of 1-yuan will be added. In this case, it is preferable that the nine unit identifiers corresponding to the monetary units having the denomination of 10-yuan and the ten unit identifiers corresponding to the monetary units having the denomination of 1-yuan can indicate the source, that is, indicate that these unit identifiers originate from the one unit identifier corresponding to the monetary unit having the denomination of 100-yuan. Assuming that the one monetary unit corresponding to identify1A is divided into nine monetary units having the denomination of 10-yuan which have the unit identifiers of identify22A-identify30A and ten monetary units having the denomination of 1-yuan which have the unit identifiers of identify31A-identify40A, identify22A-identify40A should contain information about identify1A. At the same time, identify1A is deleted from the user status information of user A. In an embodiment of the present invention, the system keeps a split log for future track.

As will be appreciated by those skilled in the art, the electronic money handling system preferably employs the same monetary unit division rule for all user accounts when dividing the electronic money in the user accounts into monetary units. However, it is also possible a particular monetary unit division rule is employed for a certain group of users or a particular user.

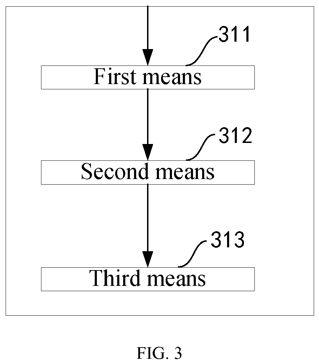

FIG. 3 is a schematic structural view of an electronic money processing device according to an embodiment of the present invention. As shown in FIG. 3, the electronic money processing device includes:

a first means 111 for dividing electronic money in a user account into one or more monetary units;

a second means 112 for determining a unit identifier for at least one of the one or more monetary units through encoding processing;

a third means 113 for establishing account status information corresponding to the user account, wherein the account status information includes correspondence relationship between the unit identifier of the monetary unit which is obtained by the encoding processing and a denomination.

Here, the electronic money processing device includes, but is not limited to, a network device, a user device or a device formed by integration of a network device and a user device through a network. Here, the network device includes, but is not limited to, a network host, a single network server, a set of a plurality of network servers or a cloud-based computer set. Here, cloud is made up of a large number of hosts or network servers based on cloud computing which is a type of distributed computing in which a group of loosely coupled computers form a super virtual computer. Here, the user device may be any electronic product that can interact with a user through a keyboard, a mouse, a touch pad, a touch screen, or a handwriting device, such as a computer, a mobile phone, a PDA, a palmtop computer PPC or a tablet computer. The networks include, but are not limited to, the Internet, a wide area network, a metropolitan area network, a local area network, a VPN network or a wireless Ad Hoc network. It should be understood by those skilled in the art that the above-described electronic money processing devices are by way of example only, other existing or future network devices or user devices are included within the scope of the present application if they are applicable to this application, and are incorporated herein by reference. Here, both the network device and the user device include an electronic device capable of automatically performing numerical calculation and information processing in accordance with pre-set or stored instructions, and the hardware includes, but is not limited to, a microprocessor, an application specific integrated circuit (ASIC), a programmable gate array (FPGA), a digital processor (DSP), an embedded device and the like.

Preferably, the first means 111 may divide the electronic money in the user account into one or more monetary units according to a predetermined unit division rule. The predetermined unit division rule may be stored in the electronic money processing device, and may be stored in a device connected to the electronic money processing device through a network. The predetermined unit division rule may contain information about the currency units (e.g., 100-yuan, 1000-yuan, or 10000-yuan) of the electronic money and the minimum currency unit. It should be understood by those skilled in the art that the above-described unit division rule is by way of example only, other existing or future unit division rules are included within the scope of the present application if they are applicable to this application, and are incorporated herein by reference.

More preferably, the electronic money processing device further comprises an eighth means (not shown) for determining the unit division rule based on account output history record information corresponding to the user account. For example, the currency unit frequently used in the user account is determined based on a payment or transfer record of the user account, and the currency unit is determined as the monetary unit based on which the electronic money will be divided, so as to determine the unit division rule. Here, the account output history record information includes, but is not limited to, records such as payment and transfer of the corresponding user account.

For example, in the above-mentioned embodiment, it may be determined that the unit division rule contains only the currency unit of $\alpha$ level if the payment or transfer record of the user account of user A indicates that user A uses the currency unit of $\alpha$ level.

Here, in the present invention, the combined operation overhead at the time of subsequent payment or transfer can be reduced by determining the unit division rule based on the account output history record information corresponding to the user account.

In a preferred embodiment, the electronic money processing device further comprises a ninth means (not shown) for retrieving account input information of the user account and a tenth means (not shown) for updating the account status information based on the account input information.

Specifically, the ninth means retrieves the account input information of the user account by calling an application program interface (API) provided by a platform corresponding to the user account, or by receiving the account input information for the user account sent by a payer via a payment gateway.

It should be understood by those skilled in the art that the above-described manner of updating account status information is by way of example only, other existing or future manners of updating account status information are included within the scope of the present application if they are applicable to this application, and are incorporated herein by reference.

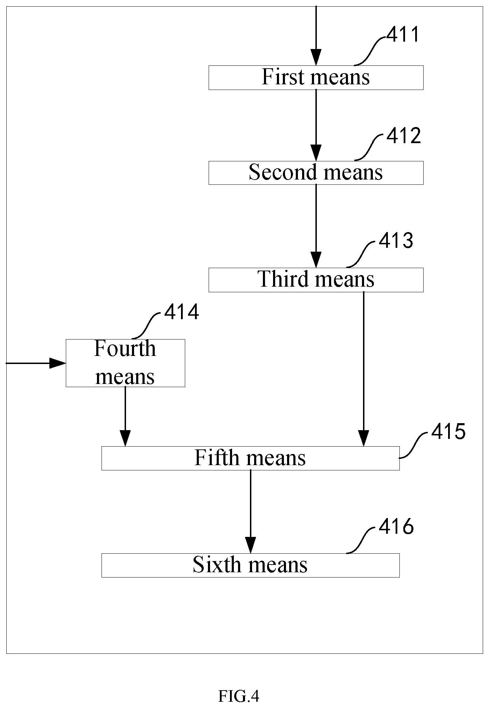

FIG. 4 is a schematic structural view of an electronic money processing device according to another embodiment of the present invention. The electronic money processing devices includes:

a first means 211 for dividing electronic money in a user account into one or more monetary units;
a second means 212 for determining a unit identifier for at least one of the one or more monetary units through encoding processing;
a third means 213 for establishing account status information corresponding to the user account, wherein the account status information includes correspondence relationship between the unit identifier of the monetary unit which is obtained by the encoding processing and a denomination;

a fourth means 214 for obtaining an account output request;

a fifth means 215 for determining an output unit combination including one or more of the monetary units based on the account output request and the account status information, wherein a sum of the denominations of the respective monetary units in the output unit combination is greater than or equal to an output denomination corresponding to the account output request;

a sixth means 216 for outputting the output unit combination and updating the account status information.

It will be understood by those skilled in the art that the first means 211, the second means 212 and the third means 213 may be the same as or substantially the same as the corresponding means in the embodiment shown in FIG. 3. These means will not be described here for simplicity and are incorporated here by reference.

It should be understood by those skilled in the art that the above-described output restriction conditions are by way of example only, other existing or future output restriction conditions are included within the scope of the present application if they are applicable to this application, and are incorporated herein by reference.

More preferably, the electronic money processing device further comprises a seventh means (not shown) for determining the output restriction condition based on account output history record information corresponding to the user account. In one embodiment of the present invention, the method of the present invention may be performed in a hardware device including one or more processors (CPUs), input/output interfaces, network interfaces and storage media. The storage medium may be a computer-readable medium, including permanent and non-permanent, removable and non-removable media, examples of which include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory, compact disc read-only memory (CD-ROM), digital versatile disc (DVD), or other optical storage, magnetic tape cartridge, magnetic tape storage or other magnetic storage device, or any other non-transfer medium that may be used for storing information accessible by computing devices.

In particular, the method of the present invention may be implemented in a program or computer readable instructions stored in a storage medium. When the program or computer readable instructions stored in the storage medium is executed by a processer, the method according to the present invention can be realized by means of communication with an external system through the input/input interfaces or the network interfaces.

It will be apparent to those skilled in the art that the present application is not limited to the details of the above-described exemplary embodiments, and that the present application may be embodied in other specific forms without departing from the spirit or essential characteristics thereof. The present embodiments are therefore to be considered in all respects as illustrative and not restrictive, and the scope of the present application is defined by the appended claims rather than by the foregoing description, therefore all modifications within the meaning and range of equivalents are therefore intended to be included in the present application. Any reference sign in the claims shall not be construed as limiting the claims to which they relate. Furthermore, it is clear that the term "comprise" does not exclude other elements or steps, and the singular form does not exclude a plurality. The plurality of units or means set forth in the device claims may also be realized by one unit or means through software or hardware. The terms first, second and so on are used to denote names, and do not denote any particular order.

## Claims

1. A method for processing electronic money, comprising:

    dividing electronic money in a user account into one or more monetary units;
    determining a unit identifier for at least one of the one or more monetary units through encoding processing;
    establishing account status information corresponding to the user account, wherein the account status information includes correspondence relationship between the unit identifier of the monetary unit which is obtained by the encoding processing and a denomination.

2. The method of claim 1, wherein the monetary unit is associated with a currency unit and the denomination.

3. The method of claim 2, wherein when a total amount of the electronic money is sum-A= $a_1 \times \alpha + a_2 \times \beta + a_3 \times \gamma$, where each of $a_1$, $a_2$ and $a_3$ is a positive integer, $\alpha$, $\beta$ and $y$ are currency units, the number of the monetary units is $a_1 + a_2 + a_3$.

4. The method of claim 2 or 3, wherein the currency unit is any of 1-fen, 2-fen, 5-fen, 1-jiao, 2-jiao, 5-jiao, 1-yuan, 2-yuan, 5-yuan, 10-yuan, 50-yuan, 100-yuan and 1000-yuan or any combination thereof.

**5.** The method of claim 1, further comprising:

obtaining an account output request;
determining an output unit combination including one or more of the monetary units based on the account output request and the account status information, wherein a sum of denominations of the respective monetary units in the output unit combination is greater than or equal to an output denomination corresponding to the account output request;
outputting the output unit combination and updating the account status information.

**6.** The method of claim 5, wherein determining an output unit combination including one or more of the monetary units based on the account output request and the account status information comprises:

judging whether the output unit combination satisfies an output restriction condition;
outputting the output unit combination and updating the account status information when the output unit combination satisfies the output restriction condition.

**7.** The method of claim 6, wherein the output restriction condition comprises that the monetary unit in the output unit combination satisfies at least one of the following:

a circulation frequency of the unit identifier of the monetary unit is lower than or equal to a circulation frequency threshold;
a target output account corresponding to the monetary unit belongs to trusted accounts of the latest source account of the monetary unit;
the monetary unit has no corresponding unit identifier;
a sum of denominations of all monetary units having no unit identifier in the output unit combination is less than a trusted denomination threshold.

**8.** The method of claim 6 or 7, further comprising:

determining the output restriction condition based on account output history record information corresponding to the user account.

**9.** The method of any one of claims 1 to 8, wherein dividing electronic money in a user account into one or more monetary units comprises:

dividing the electronic money in the user account into one or more monetary units according to a predetermined unit division rule.

**10.** The method of claim 9, further comprising:

determining the unit division rule based on account output history record information corresponding to the user account.

**11.** The method of any one of claims 1 to 10, further comprising:

retrieving account input information of the user account;
updating the account status information based on the account input information.

**12.** The method of claim 11, wherein updating the account status information based on the account input information comprises:

adding correspondence relationship between the unit identifier of the monetary unit and the denomination in the account input information into the account status information.

**13.** The method of claim 11 or 12, wherein updating the account status information based on the account input information comprises:

implementing dividing and encoding processing for monetary units to be divided in the account input information to obtain correspondence relationship between a unit identifier of one or more new monetary units and a denomination;

adding the correspondence relationship between the unit identifier of the one or more new monetary units and the denomination into the account status information.

14. A device for processing electronic money, comprising:

a first means for dividing electronic money in a user account into one or more monetary units;

a second means for determining a unit identifier for at least one of the one or more monetary units through encoding processing;

a third means for establishing account status information corresponding to the user account, wherein the account status information includes correspondence relationship between the unit identifier of the monetary unit which is obtained by the encoding processing and a denomination.

15. The device of claim 14, further comprising:

a fourth means for obtaining an account output request;

a fifth means for determining an output unit combination including one or more of the monetary units based on the account output request and the account status information, wherein a sum of denominations of the respective monetary units in the output unit combination is greater than or equal to an output denomination corresponding to the account output request;

a sixth means for outputting the output unit combination and updating the account status information.

16. The device of claim 15, further comprising:

a seventh means for determining an output restriction condition based on account output history record information corresponding to the user account, and transferring the output restriction condition to the sixth means which judges whether the output unit combination satisfies the output restriction condition.

17. The device of claim 15, further comprising:

an eighth means for determining a unit division rule based on account output history record information corresponding to the user account.

18. The device of any one of claims 14 to 17, further comprising:

a ninth means for retrieving account input information of the user account;

a tenth means for updating the account status information based on the account input information.

Start

Dividing electronic money in a user account
into one or more monetary units
S11

Determining a unit identifier for at least one
of the one or more monetary units through
encoding processing
S12

Establishing account status information
corresponding to the user account
S13

End

FIG. 1

```
                        ┌──────────────┐
                        │    Start     │
                        └──────┬───────┘
                               │
                               ▼
        ┌──────────────────────────────────────────┐   S21
        │  Dividing electronic money in a user      │
        │  account into one or more monetary units  │
        └──────────────────┬───────────────────────┘
                           │
                           ▼
        ┌──────────────────────────────────────────┐   S22
        │  Determining a unit identifier for at     │
        │  least one of the one or more monetary    │
        │  units through encoding processing        │
        └──────────────────┬───────────────────────┘
                           │
                           ▼
        ┌──────────────────────────────────────────┐   S23
        │  Establishing account status information  │
        │  corresponding to the user account,       │
        └──────────────────────────────────────────┘

 S24
 ┌──────────────────┐
 │ Obtaining an     │
 │ account output   │
 │ request          │
 └────────┬─────────┘
          │
          ▼
 ┌──────────────────────────────────────────────────┐   S25
 │  Determining an output unit combination           │
 │  including one or more of the monetary units       │
 │  based on the account output request and the       │
 │  account status information                        │
 └────────────────────┬───────────────────────────────┘
                      │
                      ▼
 ┌──────────────────────────────────────────────────┐   S26
 │  Outputting the output unit combination and        │
 │  updating the account status information            │
 └────────────────────┬───────────────────────────────┘
                      │
                      ▼
               ┌──────────────┐
               │     End      │
               └──────────────┘
```

FIG. 2

FIG. 3

FIG.4

# INTERNATIONAL SEARCH REPORT

| | |
|---|---|
| | International application No. |
| | **PCT/CN2016/075365** |

**A.    CLASSIFICATION OF SUBJECT MATTER**

G06Q 20/36 (2012.01) i

According to International Patent Classification (IPC) or to both national classification and IPC

**B.    FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, CNKI, WPI, EPODOC: currency, measurement, coding, identification, denomination, par, tracing, electronic, purse, money, pay+, unit, partition, id, amount, safe

**C.    DOCUMENTS CONSIDERED TO BE RELEVANT**

| Category* | Citation of document, with indication, where appropriate, of the relevant passages | Relevant to claim No. |
|---|---|---|
| X | CN 1478259 A (INTERNATIONAL BUSINESS MACHINES CORPORATION), 25 February 2004 (25.02.2004), description, page 3, line 13 to page 8, line 2, page 9, line 18 to page 10, line 21 and page 13, lines 1-10, claim 11, and figures 1-3C | 1-18 |
| A | CN 102147945 A (ZHANG, Yonggang), 10 August 2011 (10.08.2011), the whole document | 1-18 |
| A | CN 101188004 A (WANG, Tao), 28 May 2008 (28.05.2008), the whole document | 1-18 |
| A | US 2004172359 A1 (NEC CORPORATION), 02 September 2004 (02.09.2004), the whole document | 1-18 |

☐ Further documents are listed in the continuation of Box C.          ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 April 2016 (12.04.2016) | **04 May 2016 (04.05.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **MENG, Zishan** Telephone No.: (86-10) **62413919** |
|---|---|

Form PCT/ISA/210 (second sheet) (July 2009)

## INTERNATIONAL SEARCH REPORT
### Information on patent family members

International application No.

**PCT/CN2016/075365**

| Patent Documents referred in the Report | Publication Date | Patent Family | Publication Date |
|---|---|---|---|
| CN 1478259 A | 25 February 2004 | JP 2004526226 A | 26 August 2004 |
| | | WO 0247040 A2 | 13 June 2002 |
| | | US 2002038288 A1 | 28 March 2002 |
| | | AU 2480602 A | 18 June 2002 |
| | | EP 1354302 A2 | 22 October 2003 |
| CN 102147945 A | 10 August 2011 | None | |
| CN 101188004 A | 28 May 2008 | None | |
| US 2004172359 A1 | 02 September 2004 | CN 1519766 A | 11 August 2004 |
| | | JP 2004240858 A | 26 August 2004 |
| | | EP 1445743 A1 | 11 August 2004 |

Form PCT/ISA/210 (patent family annex) (July 2009)